# EUROPEAN PATENT SPECIFICATION

(11) **EP 3 074 345 B1**
(45) Date of publication and mention of the grant of the patent: **02.03.2022**
(21) Application number: 14806708.5
(22) Date of filing: 28.11.2014
(51) Int. Cl.: C02F 1/00, C02F 1/66, C02F 1/52

(54) **METHOD AND APPARATUS FOR TREATING ALKALINE WATER CONTAINING SOLIDS**
VERFAHREN UND VORRICHTUNG ZUR BEHANDLUNG VON ALKALISCHEN WASSERHALTIGEN FESTSTOFFEN
PROCÉDÉ ET APPAREIL DE TRAITEMENT DE MATIÈRES SOLIDES CONTENANT DE L'EAU ALCALINE

(30) Priority: 29.11.2013 GB 201321108
(43) Date of publication of application: 05.10.2016
(73) Proprietor: Siltbuster Limited, Monmouth NP25 4EE Monmouthshire (GB)
(72) Inventor: COULTON, Richard, Osbaston Monmouth NP25 3NW (GB)
(74) Representative: Abel & Imray LLP
(86) International application number: PCT/GB2014/053533
(87) International publication number: WO 2015/079247

(56) References cited:
- GB-A- 2 467 005

## Description

This invention relates to a method and apparatus for treating alkaline water. Such water may be generated by a variety of industrial processes; the present invention is particularly, but not exclusively, concerned with treatment of water resulting from concreting operations.

In our earlier patent application No. GB 2464141 a portable treatment unit for treating various waste water products of the construction industry is described. The treatment described in that application comprises the steps of introducing water to be treated into a first compartment, bubbling carbon dioxide into the water in the first compartment, causing solids to precipitate, transferring water with solids that have precipitated into a second compartment, separating, in the second compartment, solids that have precipitated from the water, transferring water from which solids have been separated to a third compartment, bubbling carbon dioxide into the water in the third compartment to reduce further the pH of the water, and removing water from the third compartment, the pH of the water removed from the third compartment being lower than the pH of the water in the second compartment. The compartments are provided in a single portable unit.

In our earlier patent application No. GB 2467005, we describe a portable unit suitable for treating water with a particularly high concentration of solids, such as may be present in washout from cleaning a concrete skip. That apparatus is well suited to such applications but is large.

An advantage of the apparatus described above is that there is provided in a single, portable, self-contained unit all that is required for treatment of the alkaline water, but there would be advantage in providing a simpler, cheaper and smaller apparatus able to carry out similar operations.

It is an object of the invention to provide an improved method and apparatus suitable for treating alkaline water, and in particular, but not exclusively, alkaline water resulting from concreting operations.

According to a first aspect of the invention, there is provided a method according to claim 1 of treating alkaline water, the method including the following steps
i) providing a first container for receiving alkaline water;
ii) providing a second container for receiving alkaline water from the first container;
iii) providing a pH sensor for sensing the pH of water in the second container;
iv) providing a store of neutralising agent and a pH controller for controlling the feeding of a neutralising agent;
v) receiving alkaline water in the first container;
vi) feeding alkaline water from the first container to the second container; and
vii) feeding neutralising agent from the store of neutralising agent into the second container under the control of the pH controller to reduce the pH of the alkaline water fed to the second container from the first container;
characterised in that a neutralisation unit is provided including the store of neutralising agent and the pH controller, and in that the first and second containers and the neutralisation unit are arranged, after transport, as separate portable units; and wherein
the neutralisation unit is arranged to rest partly or wholly inside the first container during transport and/or one of the first and second containers is arranged to rest partly or wholly inside the other during transport.

By providing three physically separate units, the transportability of the apparatus can be greatly facilitated. Furthermore, as explained below, the first and second containers may be of very simple construction and may even be of a kind commonly available at sites of concreting operations, in which case it is only the neutralisation unit that has to be transported to the site. The neutralisation unit may be compact; in a particular example of the invention described below, the unit has an overall height of 1.8m, an overall width of 1.2m and an overall depth of 0.8m. The unit may be designed to be lifted and transported by a conventional fork lift truck.

By providing three units, they may each be made of a size such that they can be transported on a vehicle from one construction site to another, without requiring any special treatment, on road or rail.

In a typical case the alkaline water received in the first container will have a significant solids content. Accordingly, it is a feature of a preferred embodiment of the invention that solids settle out of the alkaline water in the first container.

Step vi) of the method may comprise feeding alkaline water from an upper region of the water in the first container to the second container. Water in the upper region of the first container will be relatively free of any solids.

The alkaline water is preferably pumped from the first container to the second container. Of course other arrangements may also be employed such as arranging the containers at different heights and providing a gravity feed.

In a preferred embodiment of the invention the method includes the further step of removing the treated water from the second container. In the preferred embodiment, water is pumped into the second container from the first container and, once the second container is close to being full and the treatment with the neutralising agent has been carried out, it is emptied. The treated water may be pumped from the second container, for example into a drain or to another vessel for re-use and/or further treatment.

As well as removing treated water from the second container, there may be some solids that have collected in the bottom of the second container and these can also be removed periodically. Solids that build up in the first container can also be emptied periodically, after pumping most of the alkaline water into the second container. As will be understood, the method of the invention is preferably carried out as a batch process. The same pump may be used to feed alkaline water from the first container to the second container and to remove treated water from the second container. In a preferred embodiment of the invention a submersible pump is used and the pump is transferred from the first container to the second container when it is desired to remove treated water from the second container. The pump may rest on the bottom of a container or it may be supported above the bottom of the container. The height at which the pump is supported may be adjustable.

The neutralising agent may be carbon dioxide. Where reference is made in the specification to carbon dioxide, it should be understood that the gas referred to will contain a substantial amount of carbon dioxide, but may also have other components. Preferably at least 90 per cent by volume of the gas would be carbon dioxide. Preferably the carbon dioxide is introduced into a lower region of the second container. Whilst it is within the scope of the invention for carbon dioxide to be introduced through a single inlet, it is preferred that the carbon dioxide is dispersed through a multiplicity of inlets extending across a part of the second container. Other neutralising agents may also be used. For example, an acid solution may be used, for example hydrochloric, sulphuric or citric acid.

Preferably the pH of the water in the second container is monitored and the rate at which the neutralising agent is introduced into the water is controlled by the monitoring.

Other steps may be carried out as part of the method of the invention. For example, there may be a step of adding flocculants to the alkaline water. That may promote settlement in the first and/or second containers. The flocculant may be in solid or liquid form.

According to the invention, there is also provided an apparatus according to claim 7, comprising:
i) a first portable container for receiving alkaline water;
ii) a second portable container for receiving alkaline water from the first container;
iii) a pH sensor for sensing the pH of water in the second container;
iv) a store for storing a neutralising agent and a pH controller;
v) a neutralising agent feed means for feeding a neutralising agent from the store to the second container under the control of the pH controller;
characterised in that a neutralisation unit is provided including the store for neutralising agent and the pH controller, and in that the first and second containers and the neutralisation unit are arranged, after transport, as separate portable units; and wherein the neutralisation unit is arranged to rest partly or wholly inside the first container during transport and/or one of the first and second containers is arranged to rest partly or wholly inside the other during transport.

The first and/or second containers may be open-topped containers and have opposite sides inclined outwardly and upwardly. In a preferred embodiment of the invention, the first and second containers are conventional builders' skips. Such skips will commonly already be available on a construction site where the apparatus of the invention may be used, but if they are not, they can readily be transported to and from the site. Other forms of container capable of containing a quantity of water may also be employed. One of the first and second containers may be arranged to rest partly or wholly inside the other during transport. The second container may be arranged to rest partly or wholly inside the first container during transport. The first container may have a height around at least 50 per cent of its perimeter of less than 0.9m. That allows the apparatus to be used to wash out apparatus, for example, concrete pumps, which have their discharge points low to the ground. The first container may have a footprint of more than 4m². The first container may be of approximately square shape, the width (shorter dimension) of the container preferably being more that 70 per cent of the length (longer dimension) of the container.

One or more further containers may be provided for carrying out further treatment of the water upstream or downstream of the first and second containers or between the first and second containers.

The apparatus may further comprise a pump for pumping alkaline water from the first container to the second container. The neutralisation unit preferably has a storage facility in which the pump is able to be received. The storage facility may comprise a closable compartment in the neutralisation unit. That facilitates transport of the pump to and from a site where it is to be used.

The pump may be a submersible pump. The pump may be able to be supported in the first container, spaced inwardly of a top of a side of the container on a support extending over a top edge of the side of the first container and projecting inwardly from the top edge. With such an arrangement no adaptation of the first container itself is required in order to mount the pump and, furthermore, the pump is able to be mounted satisfactorily in a container with inclined sides. In use, the pump is preferably arranged with its inlet a little below the water level. The pump may be located in a mesh basket. The pump may be supported adjustably such that its height in the container is adjustable. The pump may be suspended from a flotation device such that its inlet is a given amount below the water level.

The store of the neutralisation unit is preferably arranged to store pressurised gas cylinders. The store may comprise a cage fixed to the remaining part of the neutralisation unit. Such a store may alternatively be arranged to store an acidic solution.

The apparatus may further include a gas introduction device for introducing gas into a lower region of the second container. The neutralisation unit preferably has a storage facility in which the gas introduction device is able to be received. The storage facility may comprise a closable compartment in the neutralisation unit. That facilitates transport of the gas introduction device to and from a site where it is to be used.

The gas introduction device is preferably able to be supported in a lower region of the second container, spaced inwardly of a top of a side of the container on a support extending over a top edge of the side of the second container and projecting inwardly from the top edge.

If an acidic solution is used as a neutralising agent, the apparatus may further include a pump for pumping the solution into the second container.

The neutralisation unit preferably has a storage facility in which the pH sensor is able to be received. The storage facility may comprise a closable compartment in the neutralisation unit. That facilitates transport of the pH sensor to and from a site where it is to be used.

The pH sensor may be able to be supported in the second container, spaced inwardly of a top of a side of the second container on a support extending over a top edge of the side of a second container and projecting inwardly from the top edge. The pH sensor may be supported in a lower region of the second container.

The pH controller may incorporate the neutralising agent feed means. The pH controller may be a separate unit that can be stored within the neutralisation unit, or it may be built into the neutralisation unit and remain within it.

The apparatus may further include pipes for conveying alkaline water from the first container to the second container and for conveying neutralising agent from the neutralisation unit to the second container. The neutralisation unit preferably has a storage facility in which the pipes are able to be received. The storage facility may comprise a closable compartment in the neutralisation unit. That facilitates transport of the pipes to and from a site where they are to be used.

The storage facility may comprise a single closable compartment only, or it may comprise a plurality of separate closable compartments.

Whilst the first and second containers of the apparatus of the invention defined above may be entirely conventional, the neutralisation unit is itself a novel and inventive apparatus. Thus, in a second aspect, the disclosure provides a neutralisation unit for treating alkaline water, the unit comprising a store for storing a neutralising agent, a pH controller for controlling the feeding of a neutralising agent and an additional storage facility storing a pH sensor, wherein, when, in use, the pH sensor is placed in the alkaline water, the pH controller is able to control the feeding of the neutralising agent to the alkaline water for reducing its pH.

The neutralisation unit may further include a container for containing the alkaline water to be treated. Furthermore the neutralisation unit may further include another container from which alkaline water is fed to the first mentioned container.

The additional storage facility in the neutralisation unit may store one or more of the following: one or more pipes for feeding alkaline water; one or more pipes for feeding neutralising agent; a gas introduction device for introducing gas into the alkaline water; a pump for pumping alkaline water; one or more supports for extending over a top edge of a side of a container and projecting inwardly from the top edge for supporting apparatus at a position inward of the top edge of a container.

The neutralisation unit may also include any of the features described above in respect of the invention.

Certain features of the invention have been described above only with reference to the method of the invention whilst other features have been described only with reference to the apparatus of the invention. It should be understood that a feature described in respect of the method may be represented also in a feature of the apparatus and vice versa.

By way of example, an apparatus and method for treating alkaline water will now be described with reference to the accompanying drawings of which:
- Fig. 1: is an isometric view of a portable apparatus for treating alkaline water;
- Fig. 2: is a side view of the apparatus of Fig. 1;
- Fig. 3: is a plan view of the apparatus of Fig. 1;
- Fig. 4: is an end view of the apparatus of Fig. 1;
- Fig. 5: is an isometric view of a modified form of the portable apparatus of Fig. 1, showing the apparatus in a condition in which it can be transported; and
- Fig. 6: is an isometric view of the apparatus of Fig. 5 arranged, after transport, for receipt of alkaline water to be treated.

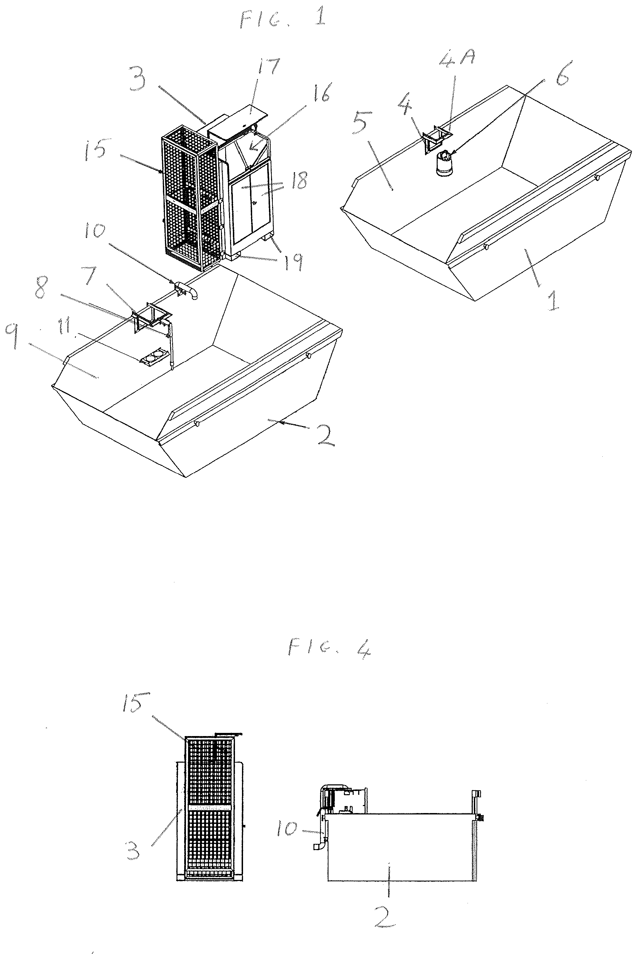

The apparatus shown in Figs. 1 to 4 generally comprises a first builders' skip 1, a second builders' skip 2 and a neutralisation unit 3. The skips 1 and 2 are of conventional design having sides that slope slightly outwardly and upwardly but have additional equipment deployed on them as described below.

A supporting bracket 4 extends over the top of a side 5 of the skip 1 and includes a part 4A that projects inwardly away from the side of the skip. The apparatus includes a submersible pump 6 which can be suspended from the part 4A of the bracket 4 clear of the side 5 of the skip at a selected height. The bracket 4 can be designed to fit satisfactorily over the top of a side edge of a wide variety of skips.

A supporting bracket 7 extends over the top of a side 9 of the skip 2 and includes a part 7A that projects inwardly away from the side of the skip. The apparatus includes a pH sensing probe 8 that is mounted on the part 7A of the bracket 7 and projects downwardly to a region close to the bottom of the skip 2. Also shown in Fig. 1 towards the bottom of the skip 2 is a carbon dioxide dispersing unit 11 which can be suspended by chains or the like (not shown) from the part 7A of the bracket 7 or from a similar part of another bracket, if preferred. The bracket 7 can be designed to fit satisfactorily over the top of a side edge of a wide variety of skips.

Also shown in Fig. 1, mounted on the top of the side 6 of the skip 2 is an inlet pipe 10. A pipe (not shown) extends from the submersible pump 6 to the inlet pipe 10 for feeding alkaline water from the skip 1 to the skip 2. Another pipe not shown extends from the neutralisation unit 3 to the dispersing unit 11 for feeding neutralising agent (carbon dioxide) to the unit 11.

The neutralisation unit 3 generally comprises a cage 15 for housing cylinders of carbon dioxide, and a main body which provides a closable compartment 16. The compartment 16 has a lid 17, which is hinged about a horizontal axis and is shown in an open position in the drawings, and a pair of doors 18, which are hinged about vertical axes and are shown in closed positions in the drawings. The neutralisation unit is supported on a pair of hollow beams 19 which are sized and shaped for easy engagement by the forks of a standard fork lift truck.

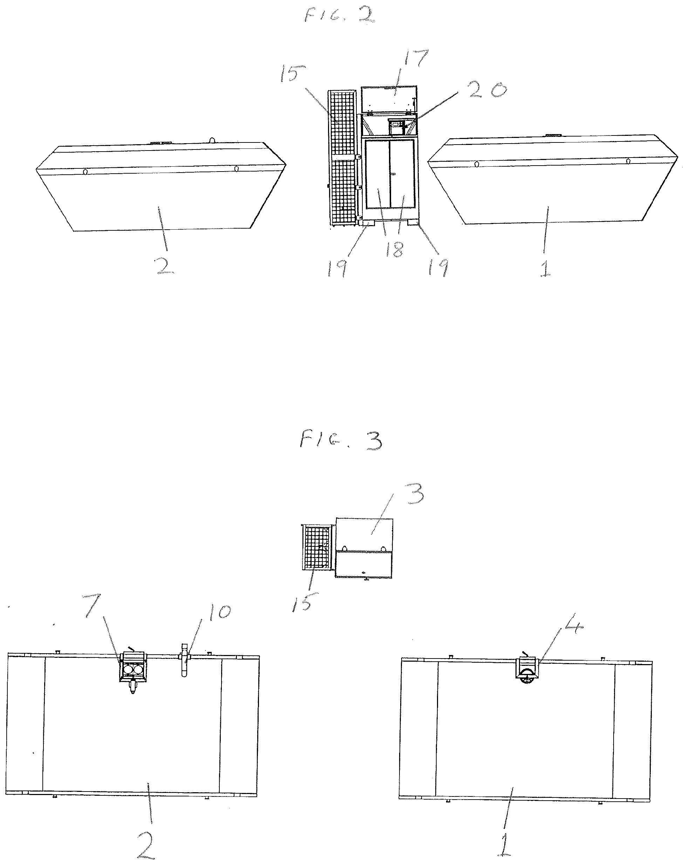

Also provided in the neutralisation unit 3 is a control unit 20 (Fig. 2) which is connected by pipes to the cylinders of carbon dioxide upstream and to the pipe leading to the dispersing unit 11 downstream. A cable (not shown) extends from the pH probe 8 to the control unit 20 to provide an indication of the pH of the water in the second skip 2.

In use, the neutralisation unit 3 is transported on a vehicle to the site where alkaline water is to be treated. It is then unloaded from the vehicle and placed in a desired position, for example by using a fork lift truck that engages the hollow beams 19. Two empty conventional builders' skips are also brought to the site to provide the skips shown in the drawings.

The compartment 16 is closed while the neutralisation unit 3 is transported to the site and contained within the compartment are the pump 6, the brackets 4 and 7, the pH sensing probe 8, the dispersion unit 11, the inlet pipe 10 and the various pipes and cable required for the connections described above.

On arrival at a site, the parts are assembled as described above with reference to the drawings and the apparatus is then ready for operation.

Alkaline water to be treated is fed into the first skip 1 either in one batch or over a period of time. Typically, if the water has resulted from concreting operations, it will have a significant solids content and those solids will settle to the bottom of the skip 1, whilst the water with least solids content will be at the top. The submersible pump 6 is placed, either automatically or manually, so that its inlet is only a small distance below the water level.

Once solids have been given time to settle, the pump 6 is operated to feed some or all of the alkaline water from the skip 1 to the skip 2. The probe 8 senses the pH of the water in the skip 2 and if the pH is higher than required the control unit 20 in the neutralisation unit 3 allows carbon dioxide from a cylinder in the cage 15 to be fed to the dispersion unit 11. Carbon dioxide rises in small bubbles from the unit 11 and dissolves in the water in the skip 2 reducing its pH.

Transfer of water to the skip 2 may continue at intervals until the skip 2 is almost full of treated water, the pH of which has been reduced to an acceptable level. The pump 6 may then be removed from the first skip and transferred to the second skip to empty the treated water from the second skip, typically to a drain or to another vessel for re-use. Any solids left in the bottom of the second skip may be removed after the water has been pumped out.

When solids have built up in the first skip to the highest acceptable level, water in the first skip should be transferred to the second skip and then the first skip emptied of the solids which may be re-used on site or disposed to landfill.

In a particular example of the embodiment of the invention described above the neutralisation unit has an overall height of 1.8m, an overall width of 1.2m and an overall depth of 0.8m.

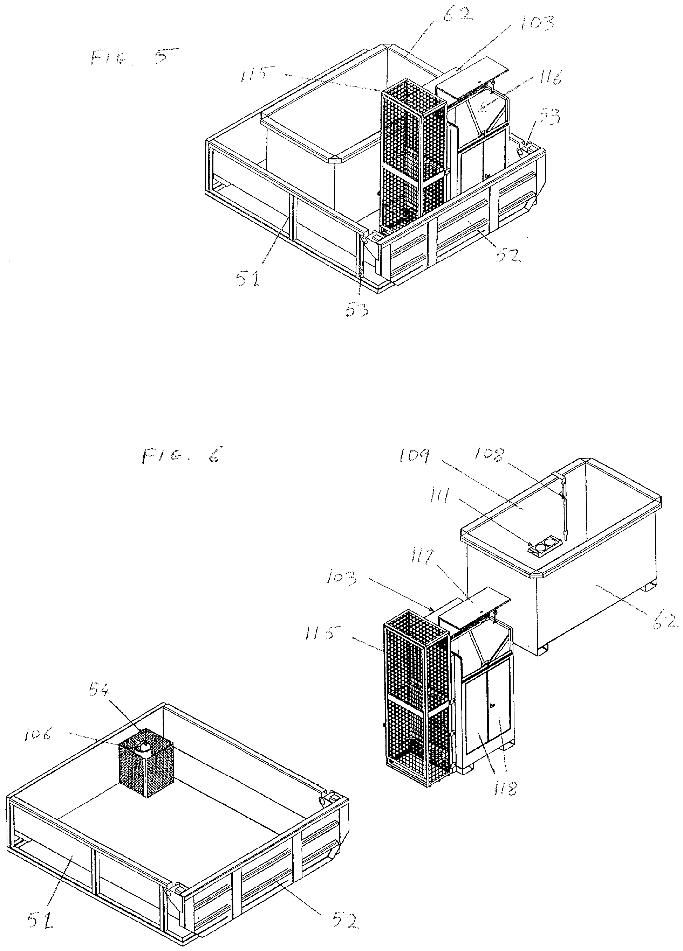

Whilst one particular embodiment of the invention has been described, it should be understood that many modifications may be made. For example the skips 1 and 2 may be replaced by other kinds of container as is described further below with reference to Figs. 5 and 6. The storage facility in the neutralisation unit may comprise two or more closable compartments, with different items stored in different compartments. Also whilst the skips 1,2 and the neutralisation unit 3 are shown in one particular configuration in the drawings, it should be understood that many other configurations may be adopted. In some applications it may be desirable to use one or more further skips in order to carry out further treatments, for example to obtain a higher quality of treated water.

Figs. 5 and 6 show a modified version of the apparatus of Figs. 1 to 4. The apparatus of Figs. 5 and 6 is generally the same as the apparatus of Figs. 1 to 4 and the same parts are designated by the same reference numerals with 100 added to the number. The description below is restricted mainly to the differences present in the apparatus of Figs. 5 and 6.

The first container 51 is a different shape, having relatively low sides, a generally square footprint and, at one end, a door 52 which is shown in its closed position in which it is watertight, but which can be pivoted about pivots 53 into an open position and removed completely if desired.

The second container 62 is of somewhat similar shape to the second container 2 of Fig. 1 but is somewhat narrower and has almost vertical sides. As shown in Fig. 5 the second container 62 is able to rest inside the first container 51 alongside the neutralisation unit 103 which is the same as the unit 3 of the apparatus of Figs. 1 to 4.

Another modification shown in Figs. 5 and 6 is that the submersible pump 106 is suspended in a removable cage 54. The cage 54 acts as a coarse filter to prevent large solids from reaching the pump 106 and facilitates the mounting of the pump 106 at an appropriate level. The cage 54 rests on the bottom of the first container 51 and thus provides a basket for the pump 106.

In use of the apparatus of Figs. 5 and 6, the container 62 and the neutralisation unit 103 are placed inside the container 51, as shown in Fig. 5, and transported to a site where alkaline water is to be treated. Once at the site the containers 51 and 62, and the neutralisation unit are placed as shown in Fig. 6 (or in another suitable configuration) and other parts, for example the pH sensing probe 108, which have been transported in the neutralisation unit 103, positioned as for the apparatus of Figs. 1 to 4. The apparatus is then used in substantially the same way as the apparatus of Figs. 1 to 4. Because of the low height of the sides and ends of the container 51, the apparatus can readily be used for washing out, for example, a concrete pump, which has its discharge close to the ground. Also solids that settle in the container 51 may be emptied by opening the door 52 to allow solids to be removed and the container 51 may be tipped, if desired.

In a particular example of the apparatus of Figs. 5 and 6, the first container 51 has a length of 2.6m and a width of 2.4m. The overall height of the apparatus is 1.9m and the apparatus is drawn approximately to scale so it can be seen that the height of the sides of the container 51 is substantially less than 0.9m

A further modification that may be applied to either the apparatus of Figs. 1 to 4 or Figs. 5 and 6, is that an acidic solution may be used in place of carbon dioxide as the neutralising agent. In this case the acidic solution can be stored in one or more suitable containers in the cage 15 or 115, and a dosing pump provided to pump the solution into the container 2. Operation of the dosing pump can be controlled by the control unit (referenced 20 in Figs. 1 to 4) of the neutralisation unit 3 or 103.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A method of treating alkaline water, the method including the following steps
i) providing a first container (1) for receiving alkaline water;
ii) providing a second container (2) for receiving alkaline water from the first container (1);
iii) providing a pH sensor (8) for sensing the pH of water in the second container (2);
iv) providing a store of neutralising agent (15)and a pH controller (20) for controlling the feeding of a neutralising agent (15);
v) receiving alkaline water in the first container (1);
vi) feeding alkaline water from the first container (1) to the second container (2); and
vii) feeding neutralising agent from the store of neutralising agent (15) into the second container (2) under the control of the pH controller (20) to reduce the pH of the alkaline water fed to the second container (2) from the first container (1);
**characterised in that** a neutralisation unit (3) is provided including the store of neutralising agent (15) and the pH controller (20), and **in that** the first and second containers (1, 2) and the neutralisation unit (3) are arranged, after transport, as separate portable units; and wherein the neutralisation unit (3) is arranged to rest partly or wholly inside the first container (1) during transport; and/or one of the first and second containers (1, 2) is arranged to rest partly or wholly inside the other during transport.

2. A method according to claim 1, in which solids settle out of the alkaline water in the first container.

3. A method according to claim 1 or 2, in which step v) comprises feeding alkaline water from an upper region of the water in the first container to the second container.

4. A method according to any preceding claim, in which the alkaline water is pumped from the first container to the second container and/or the method includes the further step of removing treated water from the second container.

5. A method according to claim 4, in which treated water is removed from the second container by pumping, using the same pump as is used for feeding the alkaline water from the first container to the second container.

6. A method according to any preceding claim, including a further step prior to step (v) of transporting the second container partly or wholly inside the first container to a site where alkaline water is to be treated, and optionally in which the neutralisation unit is also transported to the site partly or wholly inside the first container.

7. An apparatus for treating alkaline water, the apparatus comprising:
i) a first portable container (1) for receiving alkaline water;
ii) a second portable container (2) for receiving alkaline water from the first container;
iii) a pH sensor (8)for sensing the pH of water in the second container;
iv) a store (15) for storing a neutralising agent and a pH controller (20);
v) a neutralising agent feed means (20) for feeding a neutralising agent from the store to the second container (2) under the control of the pH controller (20);
**characterised in that** a neutralisation unit is provided including the store (15) for neutralising agent and the pH controller (20), and **in that** the first and second containers (1, 2) and the neutralisation unit (3) are arranged, after transport, as separate portable units; and wherein the neutralisation unit (3) is arranged to rest partly or wholly inside the first container (1) during transport; and/or one of the first and second containers (1, 2) is arranged to rest partly or wholly inside the other during transport.

8. An apparatus according to claim 7, in which the first and/or second containers are open-topped containers and have opposite sides inclined outwardly and upwardly.

9. An apparatus according to claim 7 or 8, further comprising a pump for pumping alkaline water from the first container to the second container, and optionally in which the pump is a submersible pump and is able to be supported in the first container, spaced inwardly of a top of a side of the container on a support extending over a top edge of the side of the first container and projecting inwardly from the top edge.

10. An apparatus according to any of claims 7 to 9, further including a gas introduction device for introducing gas into a lower region of the second container, and optionally in which the gas introduction device is able to be supported in a lower region of the second container, spaced inwardly of a top of a side of the second container on a support extending over a top edge of the side of the second container and projecting inwardly from the top edge.

11. An apparatus according to any of claims 7 to 10, in which the pH sensor is able to be supported in the second container, spaced inwardly of a top of a side of the second container on a support extending over a top edge of the side of the second container and projecting inwardly from the top edge.

12. An apparatus according to any of claims 7 to 11, further including pipes for conveying alkaline water from the first container to the second container and for conveying neutralising agent from the neutralisation unit to the second container.

13. An apparatus according to any of claims 9 to 12, in which the neutralisation unit has a storage facility in which one or more of the following are able to be received: the pump of claim 9; the gas introduction device of claim 10; the pH sensor of claim 11; the pipes of claim 12.

14. An apparatus according to any of claims 7 to 13, in which the second container is able to rest partly or wholly inside the first container during transport.

## Patentansprüche

1. Verfahren zur Behandlung von alkalischem Wasser, wobei das Verfahren folgende Schritte aufweist:
i) Bereitstellen eines ersten Behälters (1) zum Aufnehmen von alkalischem Wasser;
ii) Bereitstellen eines zweiten Behälters (2) zum Aufnehmen von alkalischem Wasser aus dem ersten Behälter (1);
iii) Bereitstellen eines pH-Wert-Sensors (8) zum Erfassen des pH-Werts von Wasser in dem zweiten Behälter (2);
iv) Bereitstellen eines Vorrats an Neutralisierungsmittel (15) und einer pH-Wert-Steuerung (20) zur Steuerung der Zufuhr eines Neutralisierungsmittels (15);
v) Aufnehmen von alkalischem Wasser in dem ersten Behälter (1);
vi) Zuführen von alkalischem Wasser aus dem ersten Behälter (1) in den zweiten Behälter (2); und
vii) Zuführen von Neutralisierungsmittel aus dem Vorrat an Neutralisierungsmittel (15) in den zweiten Behälter (2) unter der Steuerung der pH-Wert-Steuerung (20), um den pH-Wert des alkalischen Wassers zu verringern, das dem zweiten Behälter (2) aus dem ersten Behälter (1) zugeführt wird;
**dadurch gekennzeichnet,**
**dass** eine Neutralisierungseinheit (3) vorhanden ist, die den Vorrat an Neutralisierungsmittel (15) und die pH-Wert-Steuerung (20) beinhaltet, und dass der erste und der zweite Behälter (1, 2) und die Neutralisierungseinheit (3) nach dem Transport als separate portable Einheiten angeordnet werden; und wobei die Neutralisierungseinheit (3) während des Transports teilweise oder vollständig innerhalb des ersten Behälters (1) angeordnet werden kann; und/oder einer von dem ersten und dem zweiten Behälter (1, 2) während des Transports teilweise oder vollständig innerhalb des anderen Behälters angeordnet werden kann.

2. Verfahren nach Anspruch 1,
bei dem sich Feststoffe aus dem alkalischen Wasser in dem ersten Behälter absetzen.

3. Verfahren nach Anspruch 1 oder 2,
bei dem der Schritt v) das Zuführen von alkalischem Wasser aus einem oberen Bereich des Wassers in dem ersten Behälter in den zweiten Behälter umfasst.

4. Verfahren nach einem der vorhergehenden Ansprüche,
bei dem das alkalische Wasser von dem ersten Behälter in den zweiten Behälter gepumpt wird und/oder das Verfahren den weiteren Schritt des Entfernens von behandeltem Wasser aus dem zweiten Behälter aufweist.

5. Verfahren nach Anspruch 4,
bei dem behandeltes Wasser aus dem zweiten Behälter durch Pumpen entfernt wird, wobei dieselbe Pumpe verwendet wird, die zum Zuführen des alkalischen Wassers aus dem ersten Behälter in den zweiten Behälter verwendet wird.

6. Verfahren nach einem der vorhergehenden Ansprüche,
das vor dem Schritt (v) einen weiteren Schritt beinhaltet, in dem der zweite Behälter teilweise oder vollständig innerhalb des ersten Behälters zu einem Ort transportiert wird, an dem alkalisches Wasser behandelt werden soll, und in dem wahlweise auch die Neutralisierungseinheit teilweise oder vollständig innerhalb des ersten Behälters zu dem Ort transportiert wird.

7. Vorrichtung zur Behandlung von alkalischem Wasser, wobei die Vorrichtung Folgendes aufweist:
i) einen ersten portablen Behälter (1) zum Aufnehmen von alkalischem Wasser;
ii) einen zweiten portablen Behälter (2) zum Aufnehmen von alkalischem Wasser aus dem ersten Behälter;
iii) einen pH-Wert-Sensor (8) zum Erfassen des pH-Werts von Wasser in dem zweiten Behälter;
iv) einen Vorrat (15) zum Aufnehme eines Neutralisierungsmittels und eine pH-Wert-Steuerung (20);
v) eine Neutralisierungsmittel-Zuführeinrichtung (20) zum Zuführen eines Neutralisierungsmittels von dem Vorrat in den zweiten Behälter (2) unter der Steuerung der pH-Wert-Steuerung (20);
**dadurch gekennzeichnet,**
**dass** eine Neutralisierungseinheit (3) vorhanden ist, die den Vorrat (15) für Neutralisierungsmittel (15) und die pH-Wert-Steuerung (20) beinhaltet, und dass der erste und der zweite Behälter (1, 2) und die Neutralisierungseinheit (3) nach dem Transport als separate portable Einheiten angeordnet sind; und wobei die Neutralisierungseinheit (3) während des Transports teilweise oder vollständig innerhalb des ersten Behälters (1) angeordnet werden kann; und/oder einer von dem ersten und dem zweiten Behälter (1, 2) während des Transports teilweise oder vollständig innerhalb des anderen Behälters angeordnet werden kann.

8. Vorrichtung nach Anspruch 7,
bei der erste und/oder der zweite Behälter Behälter mit offener Oberseite sind, bei denen gegenüberliegende Seiten nach außen und oben geneigt sind.

9. Vorrichtung nach Anspruch 7 oder 8,
die ferner eine Pumpe aufweist zum Pumpen von alkalischem Wasser aus dem ersten Behälter in den zweiten Behälter, und bei der wahlweise die Pumpe eine Tauchpumpe ist und in dem ersten Behälter mit einem Abstand nach innen von einer Oberseite einer Seite des Behälters auf einem Träger abgestützt werden kann, der sich über einem oberen Rand der Seite des ersten Behälters erstreckt und von dem oberen Rand nach innen ragt.

10. Vorrichtung nach einem der Ansprüche 7 bis 9,
die ferner eine Gaseinleitungsvorrichtung zum Einleiten von Gas in einen unteren Bereich des zweiten Behälters aufweist, und bei der optional die Gaseinleitungsvorrichtung in einem unteren Bereich des zweiten Behälters mit einem Abstand nach innen von einer Oberseite einer Seite des zweiten Behälters auf einem Träger abgestützt werden kann, der sich über einem oberen Rand der Seite des zweiten Behälters erstreckt und von dem oberen Rand nach innen ragt.

11. Vorrichtung nach einem der Ansprüche 7 bis 10,
bei der der pH-Wert-Sensor in dem zweiten Behälter mit einem Abstand nach innen von einer Oberseite einer Seite des zweiten Behälters auf einem Träger abgestützt werden kann, der sich über einem oberen Rand der Seite des zweiten Behälters erstreckt und von dem oberen Rand nach innen ragt.

12. Vorrichtung nach einem der Ansprüche 7 bis 11,
die ferner Rohre zum Fördern von alkalischem Wasser von dem ersten Behälter zu dem zweiten Behälter und zum Fördern von Neutralisierungsmittel von der Neutralisierungseinheit zu dem zweiten Behälter aufweist.

13. Vorrichtung nach einem der Ansprüche 9 bis 12,
bei der die Neutralisierungseinheit eine Aufnahmeeinrichtung aufweist, in der eines oder mehrere von Folgendem aufgenommen werden können: die Pumpe von Anspruch 9; die Gaseinleitungsvorrichtung von Anspruch 10; der pH-Wert-Sensor von Anspruch 11; die Rohre von Anspruch 12.

14. Vorrichtung nach einem der Ansprüche 7 bis 13,
bei der der zweite Behälter während des Transports teilweise oder vollständig innerhalb des ersten Behälters angeordnet werden kann.

## Revendications

1. Procédé de traitement d'eau alcaline, le procédé incluant les étapes suivantes
i) fourniture d'un premier contenant (1) pour recevoir de l'eau alcaline,
ii) fourniture d'un second contenant (2) pour recevoir de l'eau alcaline du premier contenant (1),
iii) fourniture d'un capteur de pH (8) pour détecter le pH de l'eau dans le second contenant (2),
iv) fourniture d'un réservoir d'agent de neutralisation (15) et d'un dispositif de régulation du pH (20) pour réguler l'alimentation en agent neutralisant (15),
v) réception d'eau alcaline dans le premier contenant (1),
vi) alimentation en eau alcaline depuis le premier contenant (1) au second contenant (2) et
vii) alimentation en agent de neutralisation du réservoir d'agent de neutralisation (15) dans le second contenant (2) sous le contrôle du dispositif de régulation de pH (20) pour réduire le pH de l'eau alcaline alimentée au second contenant (2) depuis le premier contenant (1),
**caractérisé en ce qu'**une unité de neutralisation (3) est fournie incluant le réservoir d'agent de neutralisation (15) et le dispositif de régulation de pH (20), et **en ce que** les premier et second contenants (1, 2) et l'unité de neutralisation (3) sont agencés, après le transport, comme des unités portatives distinctes, procédé selon lequel l'unité de neutralisation (3) est agencée pour reposer partiellement ou totalement à l'intérieur du premier contenant (1) durant le transport et/ou l'un des premier et second contenants (1, 2) est agencé pour reposer partiellement ou totalement à l'intérieur de l'autre durant le transport.

2. Procédé selon la revendication 1, selon lequel des solides de l'eau alcaline se déposent dans le premier contenant.

3. Procédé selon la revendication 1 ou 2, selon lequel l'étape v) comprend l'alimentation en eau alcaline depuis une région supérieure de l'eau dans le premier contenant au second contenant.

4. Procédé selon une quelconque revendication précédente, selon lequel l'eau alcaline est pompée du premier contenant au second contenant et/ou le procédé inclut l'étape supplémentaire d'élimination d'eau traitée du second contenant.

5. Procédé selon la revendication 4, selon lequel de l'eau traitée est éliminée du second contenant par pompage, en utilisant la même pompe que celle utilisée pour l'alimentation en eau alcaline depuis le premier contenant au second contenant.

6. Procédé selon une quelconque revendication précédente, incluant une étape supplémentaire avant l'étape (v) de transport du second contenant partiellement ou totalement à l'intérieur du premier contenant jusqu'à un site où de l'eau alcaline sera traitée, et facultativement selon lequel l'unité de neutralisation est également transportée jusqu'au site partiellement ou totalement à l'intérieur du premier contenant.

7. Appareil de traitement d'eau alcaline, l'appareil comprenant :
i) un premier contenant (1) portatif pour recevoir de l'eau alcaline,
ii) un second contenant (2) portatif pour recevoir de l'eau alcaline du premier contenant,
iii) un capteur de pH (8) pour détecter le pH de l'eau dans le second contenant,
iv) un réservoir (15) pour stocker un agent de neutralisation et un dispositif de régulation du pH (20),
v) un moyen d'alimentation en agent de neutralisation (20) pour alimenter un agent de neutralisation du réservoir au second contenant (2) sous le contrôle du dispositif de régulation du pH (20),
**caractérisé en ce qu'**une unité de neutralisation est fournie incluant le réservoir (15) d'agent de neutralisation et le dispositif de régulation du pH (20), et **en ce que** les premier et second contenants (1, 2) et l'unité de neutralisation (3) sont agencés, après le transport, comme des unités portatives distinctes et dans lequel l'unité de neutralisation (3) est agencée pour reposer partiellement ou totalement à l'intérieur du premier contenant (1) durant le transport et/ou l'un des premier et second contenants (1, 2) est agencé pour reposer partiellement ou totalement à l'intérieur de l'autre durant le transport.

8. Appareil selon la revendication 7, dans lequel les premier et/ou second contenants sont des contenants à toit ouvert et ont des côtés opposés inclinés vers l'extérieur et vers le haut.

9. Appareil selon la revendication 7 ou 8, comprenant en outre une pompe pour pomper de l'eau alcaline du premier contenant au second contenant, et facultativement dans lequel la pompe est une pompe submersible et est capable d'être supportée dans le premier contenant, espacée vers l'intérieur d'une partie supérieure d'un côté du contenant sur un support s'étendant par-dessus un bord supérieur du côté du premier contenant et faisant saillie vers l'intérieur à partir du bord supérieur.

10. Appareil selon d'une quelconque des revendications 7 à 9, incluant en outre un dispositif d'introduction de gaz pour introduire du gaz dans une région inférieure du second contenant et facultativement dans lequel le dispositif d'introduction de gaz est apte à être supporté dans une région inférieure du second contenant, espacé vers l'intérieur d'une partie supérieure d'un côté du second contenant sur un support s'étendant par-dessus un bord supérieur du côté du second contenant et faisant saillie vers l'intérieur à partir du bord supérieur.

11. Appareil selon l'une quelconque des revendications 7 à 10, dans lequel le capteur de pH est apte à être supporté dans le second contenant, espacé vers l'intérieur d'une partie supérieure d'un côté du second contenant sur un support s'étendant par-dessus un bord supérieur du côté du second contenant et faisant saillie vers l'intérieur à partir du bord supérieur.

12. Appareil selon l'une quelconque des revendications 7 à 11, incluant en outre des tuyaux pour acheminer de l'eau alcaline du premier contenant au second contenant et pour acheminer l'agent de neutralisation de l'unité de neutralisation au second contenant.

13. Appareil selon l'une quelconque des revendications 9 à 12, dans lequel l'unité de neutralisation comporte une installation de stockage dans laquelle un ou plusieurs de ce qui suit peut être reçu : la pompe selon la revendication 9, le dispositif d'introduction de gaz selon la revendication 10, le capteur de pH selon la revendication 11, les tuyaux selon la revendication 12.

14. Appareil selon l'une quelconque des revendications 7 à 13, dans lequel le second contenant est capable de reposer partiellement ou totalement à l'intérieur du premier contenant durant le transport.
